# EUROPÄISCHE PATENTSCHRIFT

(11) **EP 4 499 411 B1**
(45) Veröffentlichungstag und Bekanntmachung des Hinweises auf die Patenterteilung: **22.04.2026**
(21) Anmeldenummer: 23714659.2
(22) Anmeldetag: 22.03.2023
(51) Int. Cl.: B33Y 70/10, B22F 10/18, B29C 64/118, C04B 35/626, C04B 35/632, C04B 35/634, C04B 35/636, B33Y 40/20

(54) **FILAMENTE FÜR DIE THERMOPLASTISCHE 3D-FERTIGUNG VON KERAMISCHEN BAUTEILEN, METALLISCHEN BAUTEILEN BZW. BAUTEILEN AUF DER BASIS VON METALLOKERAMISCHEN VERBUNDWERKSTOFFEN**
FILAMENTS FOR THERMOPLASTIC 3D PRODUCTION OF CERAMIC COMPONENTS, METALLIC COMPONENTS OR COMPONENTS BASED ON METAL-CERAMIC COMPOSITES
FILAMENTS POUR LA PRODUCTION 3D THERMOPLASTIQUE DE COMPOSANTS CÉRAMIQUES, DE COMPOSANTS MÉTALLIQUES OU DE COMPOSANTS À BASE DE COMPOSITES MÉTAL-CÉRAMIQUE

(30) Priorität: 29.03.2022 DE 102022001070
(43) Veröffentlichungstag der Anmeldung: 05.02.2025
(73) Patentinhaber: Technische Universität Bergakademie Freiberg, 09599 Freiberg (DE)
(72) Erfinder: ANEZIRIS, Christos G., 09599 Freiberg (DE); YAROSHEVSKYI, Serhii, 09599 Freiberg (DE); MALCZYK, Piotr, 09599 Freiberg (DE)
(74) Vertreter: Kailuweit & Uhlemann Patentanwälte Partnerschaft mbB
(86) Internationale Anmeldenummer: PCT/EP2023/057289
(87) Internationale Veröffentlichungsnummer: WO 2023/186645

(56) Entgegenhaltungen:
- WO-A1-2020/200424
- US-A1- 2016 347 667
- US-A1- 2018 162 044

## Beschreibung

Die Erfindung betrifft ein Filament für die thermoplastische 3D-Fertigung von keramischen Bauteilen, metallischen Bauteilen bzw. metallokeramischen Verbundwerkstoffen oder Werkstoffverbunden.

Solche Verfahren sind bekannt u.a. als Fused Filament Fabrication und abgekürzt als 3D FFF Verfahren.

In der Regel werden thermoplastische Filamente über einen Extruder einer oder mehreren geheizten Düse zugeführt. Der Binder oder das Bindemittelsystem auf Polymerbasis wird aufgeschmolzen und an einer gewünschten Position abgelegt. Durch die Abkühlung und Erhärtung können somit Schichten mit Dicken zwischen 0.05 bis zu mehreren mm aufgebaut werden. Über diese Schichtbauweise können Bauteile generiert werden, die anschließend thermisch wärmebehandelt werden. Es folgt in der Regel erstmal eine thermische und/oder chemische Entbinderung und anschließend folgt eine weitere thermische Behandlung bei höheren Temperaturen im Sinne einer Sinterung. Nach der Sinterung erhalten die Bauteile ihre endgültigen mechanischen, thermomechanischen, chemischen und funktionstechnischen Eigenschaften.

Bindemittel auf der Basis von Polyester, Styrol-Acryl-Polymere, Wachs und/oder Polyethylen sind gängige Komponenten in Bindemittelsystemen für 3D-Druckersysteme und werden in CN104693637B, WO2018112263A1 (initial. JP2020501941A) oder in WO2017/182209 A01 offenbart.

US 9 102 114 B1 offenbart ein Verfahren zur Herstellung einer keramischen Wabenstruktur. Dabei wird ein TiO₂ und Al₂O₃ enthaltener Precursor u.a. mit einem Binder zu einer Paste gemischt, die anschließend in eine Wabenform extrudiert, getrocknet und gesintert wird. Als Bindermaterialen werden Zellulose, Lignin- bzw. Lignonsulfonat, Polyethylen aufgeführt, Stearinsäure kann als Schmiermittel und Weichmacher zugegeben werden.

US2016347667 zeigt ein Filament, das zur Verwendung in einem 3D-Druckgerät geeignet ist, wobei das Filament keramisches Pulver enthält. Die Filamente können sowohl Stearinsäure als auch PE enthalten.

Die Erfindung betrifft ein Filament nach dem unabhängigen Anspruch 1, ein Verfahren zu dessen Herstellung und die Verwendung eines Bindemittelsystems, vorteilhafte Ausgestaltungen beinhalten die Unteransprüche.

Die Erfindung umfasst ein Filament für das thermoplastische 3D-Drucken von Keramiken oder Metallen oder metallokeramischen Verbundwerkstoffen oder Werkstoffverbunden über einen schichtweisen Aufbau aus einem Bindemittelsystem, enthaltend Polyethylen, Stearinsäure, Ligninsulfonat und Zellulose; und keramischen, metallischen und/oder metallokeramischen Pulvern, wobei das Bindemittelsystem 5 bis 25 Gew. % Polyethylen, 0,5 bis 4 Gew. % Stearinsäure, 0,1 bis 1,5 Gew. % Ligninsulfonat und 1 bis 6 Gew. % Zellulose, bezogen auf die Masse des Filaments, enthält.

In bevorzugten Ausführungsformen enthält das Bindemittelsystem zusätzlich 0,01 bis 5 Gew. %, bezogen auf die Masse des Filaments, feine keramische Pulver mit einem d50 kleiner 1 µm.

In weiteren bevorzugten Ausführungsformen werden als feine keramische Pulver Titandioxid, Siliziumdioxid, Eisenoxid, Lanthanoxid, Strontiumoxid, Gadoliniumoxid, Siliziumkarbid, Borkarbid oder Mischungen davon eingesetzt.

Die Erfindung umfasst weiterhin ein Verfahren zur Herstellung von erfindungsgemäßen Filamenten, wobei das Bindemittelsystem, enthaltend Polyethylen, Stearinsäure, Ligninsulfonat und Zellulose; mit keramischen, metallischen und/oder metallokeramischen Pulvern in einem Mischer granuliert werden und anschließend mindestens einmal durch einen aufheizbaren Extruder extrudiert werden, anschließend das Filament zerbrochen und das generierte Brechgranulat nochmals durch den aufheizbaren Extruder zum Filament überführt wird.

Die Erfindung umfasst weiterhin ein Verfahren zur Herstellung von 3D-gedruckten Bauteilen auf der Basis von erfindungsgemäßen Filamenten, wobei Partikel aus metallischen und keramischen Ausgangsrohstoffen über Aufbaugranulation oder 3D-Druckverfahren oder Beschichtungsverfahren synthetisiert werden, danach in Filamente in einem aufheizbaren Extruder mit dem neuartigen Bindemittel überführt werden und anschließend thermoplastisch gedruckt werden.

Zur Erfindung gehört weiterhin die Verwendung eines Bindemittelsystems, enthaltend Polyethylen, Stearinsäure, Ligninsulfonat und Zellulose, zur Herstellung von Filamenten aus dem Bindemittelsystem und keramischen, metallischen und/oder metallokeramischen Pulvern, für das thermoplastische 3D-Drucken von Keramiken oder Metallen oder metallokeramischen Verbundwerkstoffen oder Werkstoffverbunden über einen schichtweisen Aufbau, wobei das Bindemittelsystem 5 bis 25 Gew. % Polyethylen, 0,5 bis 4 Gew. % Stearinsäure, 0,1 bis 1,5 Gew. % Ligninsulfonat und 1 bis 6 Gew. % Zellulose, bezogen auf die Masse des Filaments, enthält.

In bevorzugten Ausführungsformen enthält das verwendete Bindemittelsystem weiterhin 0,01 bis 5 Gew. %, bezogen auf die Masse des Filaments, feine keramische Pulver mit einem d₅₀ kleiner 1 µm.

In weiteren bevorzugten Ausführungsformen werden als feine keramische Pulver Titandioxid, Siliziumdioxid, Eisenoxid, Lanthanoxid, Strontiumoxid, Gadoliniumoxid, Siliziumkarbid, Borkarbid oder Mischungen davon eingesetzt.

In Ausführungsformen besteht ein Bindemittelsystem für Filamente oder Granalien für das thermoplastische 3D Drucken von Keramiken oder Metallen oder metallokeramischen Verbundwerkstoffen bzw. Werkstoffverbunden über einen schichtweisen Aufbau aus Polyethylen, Stearinsäure, Ligninsulfonat und Zellulose.

In weiteren Ausführungsformen besteht ein Bindemittelsystem für Filamente oder Granalien für das thermoplastische 3D Drucken von Keramiken oder Metallen oder metallokeramischen Verbundwerkstoffen bzw. Werkstoffverbunden über einen schichtweisen Aufbau im Falle, dass die Sintertemperatur des Metalls kleiner als die Sintertemperatur der Keramik ist, aus Polyethylen, Stearinsäure, Ligninsulfonat und Zellulose mit Zusätzen auf Basis von keramischen Pulvern mit einem d₅₀ kleiner 1 µm.

In Ausführungsformen wird ein Bindemittelsystem offenbart, welches vorteilhaft einerseits eine hohe Strukturstabilität nach der Entbinderung bzw. möglichst einen geringen Restkohlenstoffgehalt aufweist, andererseits die Sintertemperatur insbesondere bei Verbundwerkstoffen aus Metallen und Keramiken möglichst niedrig gehalten wird, ohne dass das Metall oder die Keramiken (im Falle z.B. des Einsatzes von Refraktären Metallen) geschmolzen wird. Damit wird im Falle von metallokeramischen Verbundwerkstoffen das Risiko der in situ Karbidbildung reduziert, andererseits bleibt die Strukturstabilität des Bauteils bei der Sinterung erhalten, da mit den feinen keramischen Pulvern unter 1 µm die Sintertemperatur in der Regel der Keramik reduziert wird. Für die Strukturstabilität nach der Entbinderung dient in Ausführungsformen in dem offenbarten Bindemittelsystem die bewusste Zugabe und Kombination von Stearinsäure, Zellulose und insbesondere Ligninsulfonat. Vorteilhaft eignet sich dieses neuartige Bindemittelsystem für eine thermische Entbinderung unterhalb 400 - 500 °C.

In Ausführungsformen besteht das Bindemittelsystem aus Cellulose zwischen 1 bis 6 Gew. %, aus Ligninsulfonat 0,1 bis 1,5 Gew. %, aus Stearinsäure 0,5 bis 4 Gew. % und aus Polyethylen 5 bis 25 Gew. %. Im Falle, dass die Sintertemperatur des Metalls kleiner als die Sintertemperatur der Keramik ist, besteht das thermoplastische Bindemittel in Ausführungsformen aus Polyethylen, Stearinsäure, Ligninsulfonat und Cellulose mit Zusätzen auf Basis von feinen keramischen Pulvern mit einem d₅₀ kleiner 1 µm.

In weiteren Ausführungsformen besteht das Bindemittelsystem aus Zellulose zwischen 1 bis 6 Gew. %, aus Ligninsulfonat 0,1 bis 1,5 Gew. %, aus Stearinsäure 0,5 bis 4 Gew. %, aus Polyethylen 5 bis 25 Gew. % und aus feinen keramischen Pulvern zwischen 0,01 bis 5 Gew. %.

In Ausführungsformen dienen z.B. Titandioxid, Siliziumdioxid, Eisenoxid, Lanthanoxid, Siliziumkarbid, Strontiumoxid, Gadoliniumoxid, Borkarbid oder Mischungen davon als feine keramische Pulver.

In Ausführungsformen können vorteilhaft mit dem neuartigen Bindemittel sowohl feinkörnige (aus Körnungen kleiner 100 µm) als auch grobkörnige (aus Körnungen größer gleich 100 µm) Bauteile aus keramischen synthetischen oder natürlichen Rohstoffen, aus eisen- und nicht eisenhaltigen Metallen, refraktären Metallen oder Mischungen davon gedruckt werden.

In Ausführungsformen können Partikel aus metallischen und keramischen Ausgangsrohstoffen synthetisiert werden, z.B. aus Aufbaugranulation oder 3D-Druckverfahren oder Beschichtungsverfahren, welche anschließend in Filamente mit dem neuartigen Bindemittel überführt werden, z.B. in einem Extruder; und anschließend thermoplastisch gedruckt werden, z.B. mit der Hilfe eines 3D-Filamentendruckers.

In weiteren Ausführungsformen werden Filamente mit einem Bindemittelsystem hergestellt, indem das Bindemittelsystem mit keramischen, metallischen und/oder metallokeramischen Pulvern in einem Mischer granuliert werden und anschließend mindestens einmal durch einen aufheizbaren Extruder extrudiert werden, anschließend das Filament zerbrochen und das generierte Brechgranulat nochmals durch den aufheizbaren Extruder zum Filament überführt wird.

In weiteren Ausführungsformen werden 3D-gedruckte Bauteile auf der Basis von Filamenten mit einem Bindemittelsystem hergestellt, indem Partikel aus metallischen und keramischen Ausgangsrohstoffen über Aufbaugranulation oder 3D Druckverfahren oder Beschichtungsverfahren synthetisiert werden, danach in Filamente in einem aufheizbaren Extruder mit dem neuartigen Bindemittel überführt werden und anschließend thermoplastisch gedruckt werden.

In Ausführungsformen erfolgt die Entbinderung unterhalb 500 °C und die Sinterung oberhalb 1000 °C.

In weiteren Ausführungsformen wird die thermische Entbinderung nach folgendem Regime durchgeführt: 10 K·min⁻¹ bis 370 °C, 30 min bei 370 °C, 1 K·min⁻¹ bis 50 °C.

in Ausführungsformen dienen als keramische Pulver in Kombination mit dem neuartigen Bindemittel zur Herstellung von Filamenten z.B. Al₂O₃, ZrO₂, MgAl₂O₄, TiO₂, CaZrO₃, BaZrO₃, BaTiO₃ La₂O₃, MgO SiO₂, SiO₂, MgO, Cr₂O₃, LaCrO₃, SiC, Si₃N₄, BN, B₄C, TiB₂, TiN, AIN etc. oder Mischungen davon.

In Ausführungsformen dienen als metallische Pulver in Kombination mit dem neuartigen Bindemittel zur Herstellung von Filamenten z.B. Eisen, Stahl, Stahllegierungen, Al, Mg, Ti, Ni, Nb, W, Ta, Pt, Si, Cu, Zn, Mn, Sr, La, Co, Cr etc.

Es folgen Ausführungsbeispiele.

**Tabelle 1: Ausführungsformen von Zusammensetzungen von keramischen Filamenten**

| Material | Dichte in g/cm³ | AR78 | | AR78 + TiO₂ | |
|---|---|---|---|---|---|
| | | Vol. % | Wt. % | Vol.% | Wt.% |
| AR78 | 3,61 | 52,00 | 80,40 | 50,81 | 76,53 |
| TiO₂ | 4,31 | - | - | 1,19 | 2,37 |
| Cellulose | 1,50 | 4,80 | 3,09 | 4,80 | 3,33 |
| Ligninsulfonat | 0,60 | 2,88 | 0,74 | 2,88 | 0,80 |
| Stearinsäure | 0,87 | 4,80 | 1,79 | 4,80 | 1,93 |
| Polyethylen PE150 | 0,916 | 13,32 | 5,24 | 13,32 | 5,64 |
| Polyethylen PE70 | 0,918 | 22,20 | 8,74 | 22,20 | 9,42 |

**Tabelle 2: Ausführungsformen von Zusammensetzungen von metallo-keramischen Filamenten**

| Material | Dichte in g/cm³ | 316L + AR78 | | 316L +AR78 + TiO₂ | |
|---|---|---|---|---|---|
| | | Vol. % | Wt. % | Vol.% | Wt.% |
| AR78 | 3,61 | 20,80 | 18,76 | 20,32 | 18,30 |
| TiO₂ | 4,31 | - | - | 0,48 | 0,57 |
| 316L | 7,90 | 31,20 | 68,61 | 31,20 | 68,51 |
| Cellulose | 1,50 | 4,80 | 1,99 | 4,80 | 1,99 |
| Ligninsulfonat | 0,60 | 2,88 | 0,48 | 2,88 | 0,48 |
| Stearinsäure | 0,87 | 4,80 | 1,15 | 4,80 | 1,15 |
| Polyethylen PE150 | 0,916 | 13,32 | 3,37 | 13,32 | 3,37 |
| Polyethylen PE70 | 0,918 | 22,20 | 5,63 | 22,20 | 5,63 |

In Tabellen 1 und 2 werden Ausführungsformen für Mischungen aus dem Bindemittelsystem auf der Basis von Polyethylen (Rowalit H150, Rowalit H70 Fa. Rowak, Klettgau-Griessen), Stearinsäure (≥98%, Fa. Carl Roth, Karlsruhe), Ligningsulfonat (C12C, Fa. Otto Dille, Norderstedt), Cellulosepulver (Fa. Fluka Analytical, Sigma-Aldrich, Taufkirchen) und mit/oder ohne Titandioxid (TiO₂, d₅₀=0,2 µm, Fa. Sachtleben Chemie, Duisburg) und aluminiumoxidreichem Magnesiumaluminat-Spinell (0-20 µm, AR 78, Fa. Almatis, Ludwigshafen) mit oder ohne Stahlpulver 316L (0-60 µm, Fa. Deutche Edelstahl Werke, Witten) aufgelistet. Durch die Kombination von TiO₂ in dem Verbundwerkstoff aus 316L und Magnesiumaluminat-Spinell kann vorteilhaft bereits bei einer Sintertemperatur kleiner/gleich 1400 °C unter Argon-Schutzgasatmosphäre ein dichtes (keine offene Porosität) Bauteil erzeugt werden.

Zur Herstellung der Filamente wurde ein Doppelschneckenextruder (Brabender GmbH, Duisburg) genutzt. Der Extruder wurde mit sechs Heizelementen mit jeweils einem zugehörigen Thermoelement entlang der Schneckenlänge ausgestattet. Diese gewährleisteten eine sehr genaue Kontrolle des Extrusionsmasseverhaltens und eröffneten die Möglichkeit einer detaillierten Anpassung des Temperaturgradienten innerhalb des Extruders zur vollständig homogenen, anwendungsgerechten Polymerisierung des Binderwerkstoffes der 3D-Druck-Filamente. Der Extrusionsprozess kann in vier Phasen unterteilt werden: I) Pulverzufuhr, II) Vorheizen und Vormischen, III) Schmelzen und Polymerisieren, IV) Auspressen und Extrudieren. In jeder Phase wurden die Temperaturen der Heizelemente individuell eingestellt. Die Erarbeitung von optimalen Temperaturen und Geschwindigkeiten während der Extrusion ist entscheidend für eine erfolgreiche Prozessstabilität.

Für das Druckverfahren ist es notwendig, dass die 3D-Druck-Filamente eine gewisse Flexibilität bei einer gleichzeitig ausreichenden Formstabilität aufweisen. Dies ist stark von der Porosität und Oberflächenstruktur des Filaments abhängig. Um die Porosität des Filaments zu reduzieren, ist eine vollständige Homogenität der Extrusionsmasse erforderlich. Dafür wird nicht nur eine gleichmäßige Verteilung der Feststoffmasse und des Bindermaterials benötigt, sondern auch eine einheitliche Struktur des Binders. Die Verteilung des Feststoff- und Bindermaterials konnte durch einen vorangestellten Granulationsprozess wesentlich verbessert werden. Der Granulationsprozess wurde im Labormischer Eirich EL1 (Maschinenfabrik Gustav Eirich, Hardheim, Germany) für jeweils maximal 700 g Pulvermasse in zwei Schritten (Vormischung und Granulation) durchgeführt. Die Parameter des Granulationsprozesses sind in Tabelle 3 zusammengefasst.

**Tabelle 3. Granulationsverfahren mit wesentlichen Parametern**

| Nummer | Schritt | Parameter |
|---|---|---|
| 1 | Vormischen | Trommel: 80 min⁻¹ (Uhrzeigersinn) |
| | | Wirbler: 300 min⁻¹ (gegen den Uhrzeigersinn) |
| | | Dauer: 3 min |
| | | Wiederholungen: 2 |
| 2 | Granulation | Trommel: 80 min⁻¹ (Uhrzeigersinn) |
| | | Wirbler: 3000 min⁻¹ (gegen den Uhrzeigersinn) |
| | | Dauer: 3 min |
| | | Wiederholungen: bis Erzeugung von gleichmäßigen, sehr feinen Granalien (normalerweise 3) |

Während der Extrusion kommt es bei höheren Temperaturen zu einer Reaktion zwischen den Binderadditiven und dem Polyethylen, was wiederum die Bildung neuer komplexer Polymere zur Folge hat. Eine Zielstellung war es, diese Polymerbildung in der gesamten Extrusionsmasse zu erhalten, um eine einheitliche Struktur zu erzielen. Es wurde festgestellt, dass dafür der Extrusionsprozess der jeweiligen Masse vier Mal durchgeführt werden muss. In einem ersten Schritt wurde die granulierte Pulvermasse extrudiert, vollkommen verschmolzen und homogenisiert. Anschließend wurden die Erzeugnisse der ersten Extrusion manuell zerkleinert und für die zweite Extrusion vorbereitet.

Die Mischung aus Polyethylen und Stearinsäure zeigt erste Erweichungszeichen erst bei einer Temperatur von 110 °C bis 140 °C abhängig von der Additivzugabe. Während der Filamententwicklung zeigen sich unter anderem Ligninsulfonat als Polymerplastifikator und Zellulosenanofasern als Strukturstabilisator als vorteilhafte Additive. Diese gewährleisteten eine herausragende Stabilität der Filamente bei einem gleichzeitigen Beibehalten der Flexibilität, welche für ein erfolgreiches 3D-Druckverfahren unverzichtbar ist. Diese Filamente zeigen keinen Verlust der Strukturstabilität nach der initialen Erweichung bei 110 - 140 °C.

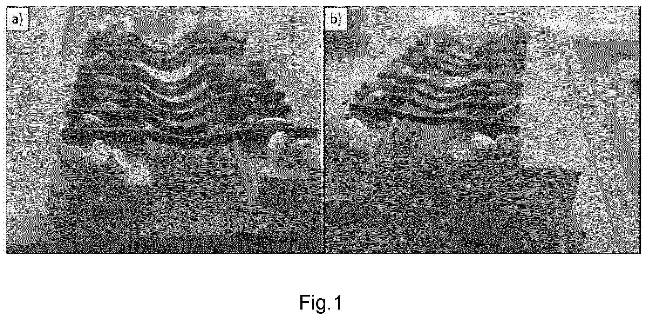

In der Abb. 1 werden ganz vorne Filamente aus dem Bindemittelsystem dargestellt und direkt dahinten verformte Filamente u.a. mit Wachszusätzen und thermisch wärmebehandelt nach dem folgenden Regime: 10 K·min⁻¹ bis 370 °C, 30 min bei 370 °C, 1 K·min⁻¹ bis 50 °C. Die Strukturstabilität des neuen Filaments ist zielführend für den anschließenden 3D Druck mit hohen Anforderungen an die Toleranztreue.

## Patentansprüche

1. Filament für das thermoplastische 3D Drucken von Keramiken oder Metallen oder metallokeramischen Verbundwerkstoffen oder Werkstoffverbunden über einen schichtweisen Aufbau aus
einem Bindemittelsystem, enthaltend Polyethylen, Stearinsäure, Ligninsulfonat und Zellulose, und
keramischen, metallischen und/oder metallokeramischen Pulvern,
wobei das Bindemittelsystem 5 bis 25 Gew. % Polyethylen, 0,5 bis 4 Gew. % Stearinsäure, 0,1 bis 1,5 Gew. % Ligninsulfonat und 1 bis 6 Gew. % Zellulose, bezogen auf die Masse des Filaments, enthält.

2. Verfahren zur Herstellung von Filamenten nach dem Anspruch 1, **dadurch gekennzeichnet, dass** das Bindemittelsystem, enthaltend Polyethylen, Stearinsäure, Ligninsulfonat und Zellulose mit keramischen, metallischen und/oder metallokeramischen Pulvern in einem Mischer granuliert werden und anschließend mindestens einmal durch einen aufheizbaren Extruder extrudiert werden, anschließend das Filament zerbrochen und das generierte Brechgranulat nochmals durch den aufheizbaren Extruder zum Filament überführt wird.

3. Verfahren zur Herstellung von 3D-gedruckten Bauteilen auf der Basis von Filamenten nach dem Anspruch 1, **dadurch gekennzeichnet, dass** Partikel aus metallischen und keramischen Ausgangsrohstoffen über Aufbaugranulation oder 3D Druckverfahren oder Beschichtungsverfahren synthetisiert werden, danach in Filamente in einem aufheizbaren Extruder mit dem neuartigen Bindemittel überführt werden und anschließend thermoplastisch gedruckt werden.

4. Verwendung eines Bindemittelsystems, enthaltend Polyethylen, Stearinsäure, Ligninsulfonat und Zellulose, zur Herstellung von Filamenten aus dem Bindemittelsystem und keramischen, metallischen und/oder metallokeramischen Pulvern, für das thermoplastische 3D-Drucken von Keramiken oder Metallen oder metallokeramischen Verbundwerkstoffen oder Werkstoffverbunden über einen schichtweisen Aufbau, wobei das Bindemittelsystem 5 bis 25 Gew. % Polyethylen, 0,5 bis 4 Gew. % Stearinsäure, 0,1 bis 1,5 Gew. % Ligninsulfonat und 1 bis 6 Gew. % Zellulose, bezogen auf die Masse des Filaments, enthält.

## Claims

1. Filament for thermoplastic 3D printing of ceramics or metals or metal-ceramic composites or material composites via a layer-by-layer build-up from a binder system containing polyethylene, stearic acid, lignin sulfonate and cellulose,
and ceramic, metallic, and/or metal-ceramic powders,
wherein the binder system comprises 5 to 25 wt. % polyethylene, 0.5 to 4 wt. % stearic acid, 0.1 to 1.5 wt. % lignin sulfonate and 1 to 6 wt. % cellulose, based on the mass of the filament.

2. Method for producing filaments according to claim 1, **characterized in that** the binder system containing polyethylene, stearic acid, lignin sulfonate, and cellulose is granulated in a mixer with ceramic, metallic, and/or metal-ceramic powders and then extruded at least once through a heatable extruder, after which the filament is broken up and the resulting broken granulate is again passed through the heatable extruder to form the filament.

3. Method for manufacturing 3D-printed components based on filaments according to claim 1, **characterized in that** particles from metallic and ceramic raw materials are synthesized via build-up granulation or 3D printing or coating processes, then converted into filaments in a heatable extruder with the novel binding agent, and subsequently thermoplastically printed.

4. Use of a binder system containing polyethylene, stearic acid, lignin sulfonate, and cellulose for producing filaments from the binder system and ceramic, metallic, and/or metal-ceramic powders, for thermoplastic 3D printing of ceramics or metals or metal-ceramic composites or material composites via a layer-by-layer build-up, wherein the binder system comprises 5 to 25 wt. % polyethylene, 0.5 to 4 wt. % stearic acid, 0.1 to 1.5 wt. % lignin sulfonate and 1 to 6 wt. % cellulose, based on the mass of the filament.

## Revendications

1. Filament pour impression 3D thermoplastique de céramiques ou de métaux ou de composites métallo-céramiques ou de compositions de matériaux, par une construction de couche par couche
d'un système de liant contenant du polyéthylène, de l'acide stéarique, du lignosulfonate et de la cellulose, et
des poudres céramiques, métalliques et/ou métallo-céramiques,
le système de liant contenant de 5 à 25 % en poids de polyéthylène, de 0,5 à 4 % en poids d'acide stéarique, de 0,1 à 1,5 % en poids de lignosulfonate et de 1 à 6 % en poids de cellulose, par rapport à la masse du filament.

2. Procédé de fabrication de filaments selon la revendication 1, **caractérisé**
**en ce que** le système de liant, contenant du polyéthylène, de l'acide stéarique, du lignosulfonate et de la cellulose, est granulé avec des poudres céramiques, métalliques et/ou métallo-céramiques dans un mélangeur et en suite extrudé au moins une fois à travers une extrudeuse chauffable, le filament est ensuite brisé et les granulés de concassage obtenus sont à nouveau transformés en filaments par l'extrudeuse chauffable.

3. Procédé de fabrication de composants imprimés en 3D à partir de filaments selon la revendication 1, **caractérisé en ce que** des particules issues de matières premières métalliques et céramiques sont synthétisées par granulation par accumulation ou impression 3D ou revêtement, puis transformées en filaments dans une extrudeuse chauffable contenant le nouveau liant et en suite imprimées par procédé thermoplastique.

4. Utilisation d'un système de liant contenant du polyéthylène, de l'acide stéarique, du lignosulfonate et de la cellulose, pour la production de filaments à partir du système de liant et de poudres céramiques, métalliques et/ou métallo-céramiques, en vue de l'impression 3D thermoplastique de céramiques ou de métaux ou de composites métallo-céramiques ou de compositions de matériaux par une construction de couche par couche, le système de liant contenant de 5 à 25 % en poids de polyéthylène, de 0,5 à 4 % en poids d'acide stéarique, de 0,1 à 1,5 % en poids de lignosulfonate et de 1 à 6 % en poids de cellulose, par rapport à la masse du filament.
